# EUROPEAN PATENT SPECIFICATION

(11) **EP 3 516 569 B1**
(45) Date of publication and mention of the grant of the patent: **27.10.2021**
(21) Application number: 17777357.9
(22) Date of filing: 22.09.2017
(51) Int. Cl.: G06F 21/32, G06K 9/03

(54) **PASSIVE AVAILABILITY TESTING**
PASSIVE VERFÜGBARKEITSPRÜFUNG
TEST DE DISPONIBILITÉ PASSIVE

(30) Priority: 26.09.2016 GB 201616270
(43) Date of publication of application: 31.07.2019
(73) Proprietor: BioCatch Ltd., 6701104 Tel Aviv (IL)
(72) Inventor: NOVIK, Alesis, London Greater London E14 5AB (GB); SUTAS, Andrius, London Greater London E14 5AB (GB)
(74) Representative: Slingsby Partners LLP
(86) International application number: PCT/GB2017/052853
(87) International publication number: WO 2018/055406

(56) References cited:
- EP-A1- 2 871 815
- US-A1- 2009 133 106
- US-B1- 9 355 234

## Description

This invention relates to testing, in a passive way, whether an authentication process is available to be used.

Identification and/or authentication of a user is an essential step in accessing many secure services or devices, such as banking, stored personal details or other restricted data. This identification and/or authentication is usually achieved by the use of passwords or personal identification numbers (PINs), which are usually assumed to be known only by the authorised user or users of a service or device.

However, knowledge of a user's password or PIN is enough for an unauthorised third party to gain access to the service or device. Thus, improved security measures have been introduced to reduce the risk of passwords and PINs from being used by unauthorised third parties. Such measures include using biometric information about the user, for example, fingerprint scanning, voice recognition and facial recognition. These improved measures have made it more difficult for unauthorised third parties to gain access. However, these improved measures may not always be available and can only be performed correctly under certain conditions. For example, a facial recognition may not be function correctly if the conditions are too dark to capture a face. There is, therefore, a need to ensure that a user can be securely identified/authenticated whilst also considering the user experience during identification/authentication so that the procedure is not overly onerous.

EP 2871815 A1 describes an authentication control system. It includes an acquisition unit configured to acquire information detected by a sensor; an evaluation unit configured to evaluate suitability for use of each of one or more sensors in environmental conditions indicated by the information; and an authentication mode selection unit configured to select an authentication mode from among a plurality of authentication modes based on an evaluation result obtained by the evaluation unit, each of the authentication modes using any one of the one or more sensors.

US 2009/0133106 A1 describes a system for determining authentication frequency (i.e., the length of time between authenticating and re-authenticating a user) and challenge type (e.g., username/password, fingerprint recognition, voice recognition) based on one or more environmental properties (e.g., ambient noise level, ambient luminosity, temperature, etc.), or one or more physiological properties of a user (e.g., heart rate, blood pressure, etc.), or both. The system allows authentication frequency and challenge type to be adjusted based on the likelihood of malicious activity, as inferred from these properties. The system enables the authentication challenge type to be tailored to particular environmental conditions (e.g., noisy environments, dark environments).

US 9,355,234 B1 describes an authentication technique which involves obtaining, by processing circuitry, a set of suitability factors from a user device of a user. The authentication technique further involves performing, based on the set of suitability factors, a selection operation which selects a set of suitable biometric methods to apply during authentication from available biometric methods which are available to the processing circuitry for use in authentication. The authentication technique further involves applying, after the set of suitable biometric methods is selected, the set of suitable biometric methods during an authentication operation to determine whether the user is authentic. Accordingly, poorly suited biometric methods can be ruled out (i.e., made unavailable for use by authentication).

According to a first aspect there is provided a method as recited in claim 1.

The method may further comprise disabling the sensor device subsequent to the enabling step and re-enabling the sensor device if the first authentication process is initiated.

The environmental parameters may be measured without prompting the user to interact with the device.

The first authentication process may comprise a step of prompting the user to interact with the device.

The first authentication process may be facial recognition and the sensor device may be a camera configured to measure an amount of light, the camera being capable of capturing data sufficient for performing facial recognition if the amount of light is greater than a threshold amount.

The first authentication process may be voice recognition and the sensor device may be a microphone configured to measure noise, the microphone being capable of capturing data sufficient for performing voice recognition if the amount of noise is less than a threshold level.

A system may be provided that is configured to perform the above method.

There may be provided computer program code for performing the method described above. There may be provided non-transitory computer readable storage medium having stored thereon computer readable instructions that, when executed at a computer system, cause the computer system to perform the method described above.

The above features may be combined as appropriate, as would be apparent to a skilled person, and may be combined with any of the aspects of the examples described herein.

The present invention will now be described by way of example with reference to the accompanying drawings. In the drawings:
Figure 1 shows an example of a device which is capable of being used to identify and/or authenticate a user.
Figure 2 shows a flow chart that illustrates one example of selecting an authentication process for identifying or authenticating a user for a task.

The following description is presented to enable any person skilled in the art to make and use the invention, and is provided in the context of a particular application. Various modifications to the disclosed embodiments will be readily apparent to those skilled in the art.

For the purposes of this disclosure, identification typically involves the collection of data and a determination of who a user is from a database or other predetermined population of users, while authentication typically involves the use of data to confirm a user is who they present themselves to be (i.e. to verify a user's identity).

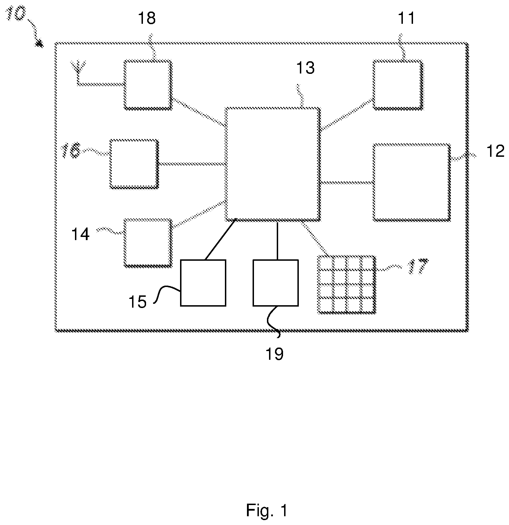

Figure 1 illustrates an example of a device 10 which could be used to identify and/or authenticate a user for particular tasks. Identification and/or authentication of a user may be required in order to, for example: access the device 10 (e.g. unlocking the device); access local functions on the device 10 (e.g. accessing files or programs stored at the device 10); access remote functions via device 10 (e.g. accessing online banking facilities or databases at a remote server via a communications connection on the device 10), etc. Device 10 may be, for example, a smart device such as a smartphone or smartwatch, an ATM or other type of banking terminal, a payment terminal (such as a credit card machine) or any other suitable computing device.

The device 10 may comprise one or more input devices 11 such as a camera and/or microphone, a display 12, a processor 13, a non-volatile memory or ROM 14, working memory or RAM 15, one or more sensors 16, a user input device 17 such a keypad or mouse and a communications interface 18 (which may a wired or wireless transceiver). In one example the display 12 may be a touchscreen, so it provides user input to the processor 13 in addition or alternatively to a separate user input device 17. The device may comprise a storage medium 19 such as flash memory. The ROM 14 may store program code that is executable by the processor 13. The program code may be stored in a non-transient form. The program code is executable by the processor 13 to perform some or all of the methods, processes and functions described herein. Some of the methods, processes and functions described herein may be performed at a computing device or system that is remote to device 10, such as one or more servers or cloud computing devices. The distribution of the processing burden may at least partly depend on the computational capabilities of the device 10 and remote computing device, and on the communication capabilities between the device 10 and remote computing device and/or the availability of communications networks between the devices. Preferably, device 10 collects information and sends that information to the remote computing device, where the majority of the processing is performed. For example, the microphone on device 10 may capture voice data and send that data to a server which performs processing for voice recognition and then sends the result of that processing back to the device 10. The processes and functions described herein could be performed wholly or partly at either the local or remote device.

The sensors 16 may be one or more sensors that are capable of gathering information about the user. For example, a GPS may be used to determine the location of the device and thus the user of the device. A motion sensor(s) (such as a gyroscope, accelerometer, pedometer, etc.) may be used to derive biometric information about the user of the device (e.g. by using the sensors to determine typical movements and motions made by the user). The sensors 16 could be biometric sensors such as a fingerprint sensor, iris scanner, etc. Other ways of determining information about the user via other means are possible, for example, facial recognition via a camera and voice recognition via a microphone. The information gathered about the user may be used for certain authentication processes, as described below.

In operation, processor 13 may receive information from the user or information gathered about the user via the user input devices, the camera, microphone, sensors and/or the communications interface. That information may be processed to identify and/or authenticate the user, as described below. As mentioned above, some or all of the processing of this information may be performed at a remote computing device.

A user may wish to be granted access for a particular task (e.g. accessing a smartphone, viewing bank account details, making a payment, etc.). Each task may have different security requirements based on their significance or value. For example, it could be considered that accessing emails on a smartphone is more significant or valuable than taking a picture with that smartphone and so accessing emails may be considered to be a task requiring higher security than taking a picture. In another example, initiating a bank transfer may be considered to be more significant or valuable than viewing a bank statement and so initiating a bank transfer may be considered to be a task requiring higher security than viewing a bank statement. Thus, each task may be associated with certain level of security that is required to be met in order to allow a user to perform that task and each task may have a different level of security to other tasks.

In the process described below, one or more processes for identifying and/or authenticating a user (also referred to herein as "authentication processes") may be performed in order to determine if a user has met the security requirements for a particular task. These authentication processes could require the user to perform some sort of action and could be authentication processes such as entering a password/passcode, placing a finger on a fingerprint sensor, looking at a camera for facial recognition or speaking into a microphone for voice recognition. The authentication processes could also be processes that could help identify or authenticate a user without requiring the user to perform a specific action or an action whose function is solely for identification or authentication purposes. For example, such an authentication process could be determining a user location via GPS, monitoring user movement characteristics via an accelerometer and determining characteristics of a user's typing behaviour.

The results of each authentication process may be checked against known data about an authorised user to determine a likelihood that the user being authenticated is the authorised user. The determined likelihood from each process may be used to determine a confidence score that indicates how likely the user is an authorised user. A user may be identified/authenticated if the confidence score meets a threshold confidence level. The threshold confidence level may be different for each task and set according to the security requirements of that task. The confidence score may be generated based on the results from the authentication processes individually or a collective score from the results from multiple authentication processes.

As described above, there may be a number of authentication processes that could potentially be carried out at the device in order to identify/authenticate a user. However, out of those processes that could potentially be used, some of them may not be available for use for various reasons. For example, a user may launch a banking application which may inform the user that identification/authentication using facial recognition cannot be performed because the application does not have access rights to a camera. In another scenario, that banking application may have access rights to the camera but when the user performs facial recognition, it may be that the facial recognition algorithm is unable to determine facial features because the environmental conditions are not suitable (e.g., because it is too dark). In both scenarios, the user is inconvenienced because he or she is either informed that the camera does not have access rights or is prompted to face the camera even though it is too dark to adequately perform facial recognition.

When determining which authentication process to use for identifying/authenticating the user, the availability of an authentication process may be tested to determine if it is available for use or not. This testing could be done passively, i.e., without the user of the device being made aware that the test is being performed and/or the user having to provide some input for the test to be performed. In a first example, to test if facial recognition is available to be used, a camera may be passively enabled to test if the environmental conditions (e.g., lighting conditions) are good enough to allow facial images to be captured at a sufficient quality for use by a facial recognition algorithm. In a second example, to test if voice recognition is available to be used, a microphone may be passively enabled to test if the environmental conditions (e.g., background noise level) are good enough to allow a voice sample to be captured at a sufficient quality for use by the voice recognition algorithm.

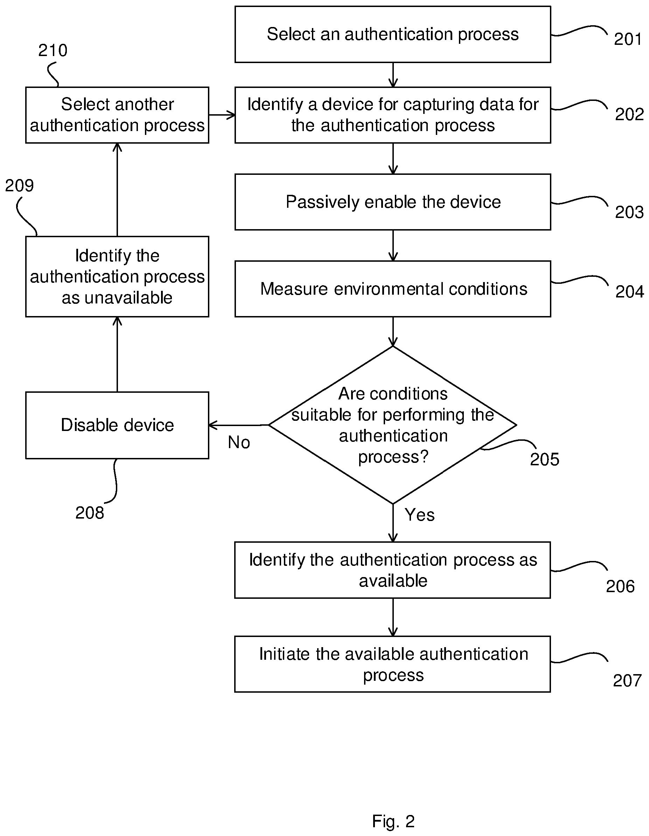

Figure 2 shows a flow diagram for identifying or authenticating a user for a task in which the availability of an authentication process is passively tested. The task may be, for example, unlocking a smartphone, accessing a bank account or accessing an email account. The task may be associated with a level of security, as described above.

At step 201, an authentication process is selected for a particular task. The authentication process may be selected from a set of authentication processes that are appropriate for each task. In one example, the task may be accessing a banking facility on a smartphone and the set of authentication processes for identifying/authenticating a user for accessing the banking facility may include facial recognition (which may use any suitable facial recognition algorithm), voice recognition (which may use any suitable voice recognition algorithm) and fingerprint scanning (which may use any suitable fingerprint scanner). The authentication processes in the set may be tested to determine which of those processes are available for identifying/authenticating the user. A first one of the processes may be selected for testing. This selection may be random or based on a predefined preferential order for the particular task. In this example, the selected authentication process is facial recognition.

At step 202, the devices that are used to capture the data required for performing the selected authentication process are identified. There may be one or more devices required to capture the necessary data. For example, in the case of facial recognition, a camera would be required. In the case of 3D facial recognition, a camera and a depth sensor may be required.

At step 203, the identified device (or devices) are enabled to test if the environmental conditions are good enough to allow the necessary data to be captured for the selected authentication process. The enabling of the device is performed passively such that the user may not be made aware that the device has been enabled. From the user perspective, the enabling of the device is performed in the background such that their use or workflow of the smartphone (for example) is not interrupted by the enabling. In the example of facial recognition, the camera is enabled but the picture captured by the camera is not displayed and so the user may not be aware that the camera has been enabled. In the example of voice recognition, the microphone is enabled but the user may not be made aware that the microphone has been turned on.

At step 204, the enabled device (or devices) capture data so as to measure the environmental conditions that the device is currently operating in. The measured conditions may be those that affect the quality of the data that is to be captured in order to perform the authentication process. For example, difficult lighting conditions may mean that a face cannot be adequately captured for facial recognition to be performed. Thus, the camera may measure the current lighting conditions to determine if they are suitable for performing facial recognition. For example, the amount of light that is present may be measured to determine if there is sufficient light for a face to be captured at a high enough quality to perform facial recognition. Other parameters may be measured that may affect the quality of facial images that are to be captured (such as the colour of the ambient light). For voice recognition, a microphone may measure background noise to determine if the environment is quiet enough so that the voice can be sufficiently distinguished from the noise in order to perform the voice recognition. The measurements are performed such that the user is not prompted or required to interact with the device. For example, when the lighting conditions are measured for facial recognition, a user is not required to face the camera. Similarly, when noise level is measured for voice recognition, the user is not required to speak into the microphone.

Subsequent to the environmental conditions being measured, the device may be disabled until it is required to be used for performing the authentication process to save power.

At step 205, it is determined whether or not the environmental conditions are suitable for performing the authentication process. The determination may be made by testing each measured parameter against an appropriate threshold. Each authentication process may be associated with a threshold that the measured conditions are required to meet in order for it to be determined that the environmental conditions are suitable. For example, for facial recognition, the threshold may be a minimum amount of light required to adequately capture a face so that facial recognition can be performed. If the camera measures an amount of light that is greater than the minimum amount, then it is considered that there is enough light to sufficiently capture a face in order to perform facial recognition. If the camera measures an amount of light that is less than the minimum amount, then it is considered that there is not enough light to sufficiently capture a face in order to perform facial recognition. In the voice recognition example, the threshold may be a maximum noise level that the voice recognition algorithm is able to adequately recognise a voice from background noise. If the microphone measures a noise level that is less than the maximum noise level, then it is considered that it is quiet enough to adequately capture a voice in order to perform voice recognition. If the microphone measures a noise level that is greater than the maximum noise level, then it is considered that conditions are too noisy to adequately capture a voice in order to perform voice recognition. The threshold that is set will be dependent on the properties of the particular camera or microphone used and the particular facial or voice recognition algorithms used.

In other examples, eye scans (for example, iris and/or retina scanning) may be used for identification/authentication. The camera that captures patterns in the eye may be passively enabled to test if the conditions are suitable for performing the scans. The conditions required to perform eye scans may be different to that for facial recognition. For example, iris scanning could be adequately performed under lower lighting levels than facial recognition and so the minimum amount of light required to deem iris scanning as available may be different to that required for facial recognition.

In a further example, the location of the user could be used (alone or in combination with another process) to identify/authenticate a user. For example, a GPS sensor on a smartphone may be used to determine a user's location, which may be used to determine whether the smartphone user is an authorised user. For example, if the determined location is the home of an authorised user, then it could be determined that the user of the smartphone is an authorised user. In this case, the GPS sensor could be enabled to measure if it is capable of receiving signals from enough satellites so as to correctly determine a location within a required accuracy. If the GPS sensor cannot receive signals for it to determine a location within a required minimum accuracy (e.g., because it cannot receive signals from enough GPS satellites), then it may be determined that the conditions are not suitable for performing the location authentication and so it is identified as being unavailable. If the GPS sensor can receive signals that allow it to determine a location at or above the required accuracy, then it is identified as being available for performing authentication based on location.

If, at step 205, it is determined that the environmental conditions are suitable, then the process moves on to step 206, where the authentication process is identified as being available. This identification may be stored in memory so that the current application or another application can later determine that the authentication process is available to be used. The process of figure 2 may be performed again to determine the availability of the other authentication processes in the set of authentication processes. The availability of each authentication process may be saved in memory.

At step 207, the available authentication process may be selected for use and initiated when authentication/identification of the user is required for a task. The application performing the task may check the memory to determine which authentication processes are available for use and select one or more of those processes to be performed by the user. For example, the banking application may check the memory to determine that facial recognition is available to be used and perform that process using the camera (which may need to be re-enabled if it was disabled after measuring the environmental conditions).

If another authentication process is required to be used (e.g., because the user failed the facial recognition process or because the task requires multiple-factor authentication) then the availability of the other processes may be determined. The availability of the other processes may be determined by performing the process of figure 2 again for the other processes or by accessing the memory to determine which processes have been recently indicated as available.

If, at step 205, it is determined that the environmental conditions are not suitable, then the process moves on to step 208, where the device is disabled. Alternatively, the device may be disabled immediately after the performance of step 204 to save power.

At step 209, the authentication process is identified as not being available and this identification is stored in memory. When identification/authentication is to be performed for other tasks or by other applications, the memory may be checked to determine which authentication processes are available or not. For example, if it is determined that the environmental conditions for facial recognition are not suitable, facial recognition is marked as unavailable in memory.

At step 210, another authentication process is selected from the set of authentication processes. For example, voice recognition may be selected. The authentication process may be selected in dependence on an order of preference or ranking associated with the authentication processes in the set of processes. Each authentication process may be ranked according to how secure or risky it is. For example, voice recognition may be considered to be more secure (and less risky) at identifying a user than entering a PIN number and so voice recognition may be selected ahead of PIN entry.

The process then loops back to step 202, where a device for capturing data for the authentication process selected at step 210 is identified and tested as described above.

Each of the authentication processes in the set of process may be tested to classify them as available or unavailable. This may be useful in cases where multiple authentication processes are required to be carried out in order to identify/authenticate a user.

The process of figure 2 may be initiated automatically by the device when it is in certain modes. For example, if a smartphone is locked and can be unlocked by a user saying certain words (e.g., "Hey Smartphone"), the noise level may be automatically and periodically tested in the background whilst in the locked mode. Thus, the testing is performed without having to prompt the user and without the user being made aware that the testing is being performed. The process of figure 2 may be initiated in response to a user input. For example, the process may be initiated in response to a user selecting a banking application and the testing may occur in the background whilst the application is initialising without the user being made aware that the testing is being performed and without requiring the user to provide any further input.

In the above example, prior to a device being passively enabled (step 203), a check may be performed to determine if the physical hardware for performing the authentication method is available to use (this step is not shown). For example, some applications may list fingerprint scanning as a means to identify/authenticate a user but not all smartphones will have fingerprint scanning hardware. If this check fails, the authentication process may be marked as unavailable and another authentication process is selected, as described above.

The availability classification performed by the process of figure 2 for a particular task may be maintained for a predetermined amount of time and used for the identification or authentication of the user for a subsequent task. For example, if facial recognition was classified as being available for a first task, the same classification may be used for a second subsequent task without re-testing the environmental conditions if the facial recognition was to be used within a predetermined amount of time from the initial testing.

The process described herein allows a device such as a smartphone to passively test whether the conditions are suitable for adequately performing an identification/authentication process without requiring a user to interact with the smartphone. The test determines which authentication processes are available to be used and which are not. Only the available authentication processes are then used to perform the identification/authentication. This has a number of advantages, such as providing a user with a more efficient and convenient identification/authentication procedure as the user will not be prompted to perform any of the authentication processes that are not going to work under current conditions. Furthermore, the passive test saves on battery and processing power as authentication processes are not run when it is determined that the conditions for those processes are not suitable. Without performing the passive test, an authentication process such as facial recognition would be run regardless of the conditions, and if the conditions were not suitable (e.g., because it is too dark), then a significant amount of battery and processing power would have been wasted by the smartphone in a futile attempt a recognise a face in dark conditions.

The device of figure 1 is shown as comprising a number of functional blocks. This is schematic only and is not intended to define a strict division between different logic elements of such entities. Each functional block may be provided in any suitable manner.

Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

A processor, computer, or computer system may be any kind of device, machine or dedicated circuit, or collection or portion thereof, with processing capability such that it can execute instructions. A processor may be any kind of general purpose or dedicated processor, such as a CPU, GPU, System-on-chip, state machine, media processor, an application-specific integrated circuit (ASIC), a programmable logic array, a field-programmable gate array (FPGA), or the like. A computer or computer system may comprise one or more processors.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method for selecting an authentication process for identifying and/or authenticating a user on a device, the method comprising:
(a) selecting (201) a first authentication process from a set of authentication processes;
(b) passively testing the availability of the selected first authentication process for use in identifying and/or authenticating the user, comprising:
(b1) identifying (202) a sensor device (16) configured to capture data for the first authentication process;
(b2) passively enabling (203) the identified sensor device (16) so as to measure (204) one or more environmental parameters; and
(b3) determining (205), in dependence on the measured parameters, whether the identified sensor device (16) is capable of capturing data sufficient for performing the first authentication process;
(c) if it is determined that the identified sensor device (16) is capable of capturing data sufficient for performing the first authentication process, then:
indicating (206) that the first authentication process is available for identifying and/or authenticating the user on the device (10);
(d) if it is determined that the identified sensor device (16) is not capable of capturing data sufficient for performing the first authentication process:
(d1) selecting (210) a second authentication process from the set of authentication processes; and
(d2) passively testing the availability of the selected second authentication process for use in identifying and/or authenticating the user, comprising:
(i) identifying (202) a second sensor device (16) configured to capture data for the second authentication process;
(ii) passively enabling (203) the identified second sensor device (16) so as to measure (204) one or more environmental parameters; and
(iii) determining (205), in dependence on the measured parameters,
whether the identified second sensor device (16) is capable of capturing data sufficient for performing the second authentication process.

2. A method as claimed in claim 1, further comprising disabling the identified sensor device (16) subsequent to the enabling step and re-enabling the identified sensor device (16) if the first authentication process is initiated.

3. A method as claimed in any of the preceding claims, wherein the environmental parameters are measured without prompting the user to interact with the device (10).

4. A method as claimed in any of the preceding claims, wherein the first authentication process comprises a step of prompting the user to interact with the device (10).

5. A method as claimed in any of the preceding claims, wherein:
the first authentication process is facial recognition; and
the sensor device (16) is a camera configured to measure an amount of light, the camera being capable of capturing data sufficient for performing facial recognition if the amount of light is greater than a threshold amount.

6. A method as claimed in any of claims 1 to 4, wherein:
the first authentication process is voice recognition; and
the sensor device (16) is a microphone configured to measure noise, the microphone being capable of capturing data sufficient for performing voice recognition if the amount of noise is less than a threshold level.

7. A system configured to perform the method of any preceding claim.

8. Computer readable code configured to perform the steps of the method of any of claims 1 to 6 when the code is run on a computer.

9. A computer readable storage medium having encoded thereon the computer readable code of claim 8.

## Patentansprüche

1. Verfahren zum Auswählen eines Authentifizierungsprozesses zum Identifizieren und/oder Authentifizieren eines Benutzers eines Gerätes, wobei das Verfahren umfasst:
(a) Auswählen (201) eines ersten Authentifizierungsprozesses aus einem Satz von Authentifizierungsprozessen;
(b) passives Prüfen der Verfügbarkeit des ausgewählten ersten Authentifizierungsprozesses zur Verwendung beim Identifizieren und/oder Authentifizieren des Benutzers, umfassend:
(b1) Identifizieren (202) einer Sensorvorrichtung (16), konfiguriert zum Erfassen von Daten für den ersten Authentifizierungsprozess;
(b2) passives Aktivieren (203) der identifizierten Sensorvorrichtung (16) zum Messen eines oder mehrerer Umgebungsparameter (204); und
(b3) Ermitteln (205), in Abhängigkeit von gemessenen Parametern, ob die identifizierte Sensorvorrichtung (16) in der Lage ist, Daten zu erfassen, die zur Durchführung des ersten Authentifizierungsprozesses ausreichend sind;
(c) bei Ermittlung, dass die identifizierte Sensorvorrichtung (16) in der Lage ist, Daten zu erfassen, die ausreichend sind, um den ersten Authentifizierungsprozess durchzuführen, dann:
Indikation (206), dass der erste Authentifizierungsprozess zur Identifizierung und/oder Authentifizierung des Benutzers des Gerätes (10) verfügbar ist;
(d) bei Ermittlung, dass die identifizierte Sensorvorrichtung (16) nicht in der Lage ist, Daten zu erfassen, die ausreichend sind, um den ersten Authentifizierungsprozess durchzuführen:
(d1) Auswählen (210) eines zweiten Authentifizierungsprozesses aus dem Satz von Authentifizierungsprozessen; und
(d2) passives Testen der Verfügbarkeit des ausgewählten zweiten Authentifizierungsprozesses zur Verwendung bei der Identifizierung und/oder Authentifizierung des Benutzers, umfassend:
(i) Identifizieren (202) einer zweiten Sensorvorrichtung (16), konfiguriert zum Erfassen von Daten für den zweiten Authentifizierungsprozess;
(ii) passives Aktivieren (203) der zweiten identifizierten Sensorvorrichtung (16) zum Messen eines oder mehrerer Umgebungsparameter (204); und
(iii) Ermitteln (205), in Abhängigkeit von gemessenen Parametern, ob die identifizierte Sensorvorrichtung (16) in der Lage ist, Daten zu erfassen, die zur Durchführung des zweiten Authentifizierungsprozesses ausreichend sind.

2. Verfahren nach Anspruch 1, das ferner das Deaktivieren der identifizierten Sensorvorrichtung (16) nach dem Aktivierungsschritt und das erneute Aktivieren der identifizierten Sensorvorrichtung (16) umfasst, wenn der erste Authentifizierungsprozess initiiert wird.

3. Verfahren nach einem der vorhergehenden Ansprüche, wobei die Umgebungsparameter gemessen werden, ohne den Benutzer aufzufordern, mit dem Gerät (10) zu interagieren.

4. Verfahren nach einem der vorhergehenden Ansprüche, wobei der erste Authentifizierungsprozess einen Schritt des Aufforderns des Benutzers, mit dem Gerät (10) zu interagieren, umfasst.

5. Verfahren nach einem der vorangehenden Ansprüche, wobei:
Der erste Authentifizierungsprozess einer Gesichtserkennung ist; und
die Sensorvorrichtung (16) eine Kamera ist, die konfiguriert ist, um eine Lichtmenge zu messen, wobei die Kamera in der Lage ist, Daten zu erfassen, die ausreichend sind, um eine Gesichtserkennung durchzuführen, wenn die Lichtmenge höher als ein Schwellenwert ist.

6. Verfahren nach einem der Ansprüche 1 bis 4, wobei:
Der erste Authentifizierungsprozess eine Spracherkennung ist und
die Sensorvorrichtung (16) ein Mikrofon ist, konfiguriert zum Messen von Rauschen, wobei das Mikrofon in der Lage ist, Daten zu erfassen, die ausreichend sind, um eine Spracherkennung durchzuführen, wenn der Rauschbetrag kleiner als ein Schwellenwert ist.

7. System, konfiguriert zum Ausführen des Verfahrens nach einem der vorhergehenden Ansprüche.

8. Computerlesbarer Programmcode, konfiguriert zum Ausführen der Schritte des Verfahrens nach einem der Ansprüche 1 bis 6, wenn der Programmcode auf einem Computer ausgeführt wird.

9. Computerlesbares Speichermedium, auf dem der computerlesbare Programmcode nach Anspruch 8 codiert ist.

## Revendications

1. Procédé de sélection d'un processus d'authentification pour identifier et/ou authentifier un utilisateur sur un dispositif, le procédé comprenant :
(a) la sélection (201) d'un premier processus d'authentification à partir d'un ensemble de processus d'authentification ;
(b) le test passif de la disponibilité du premier processus d'authentification sélectionné pour une utilisation dans l'identification et/ou l'authentification de l'utilisateur, comprenant :
(b1) l'identification (202) d'un dispositif capteur (16) configuré pour capturer des données pour le premier processus d'authentification ;
(b2) l'activation passive (203) du dispositif de capteur identifié (16) de manière à mesurer (204) un ou plusieurs paramètres environnementaux ; et
(b3) le fait de déterminer (205), en fonction des paramètres mesurés, si le dispositif capteur identifié (16) est apte à capturer des données suffisantes pour réaliser le premier processus d'authentification ;
(c) s'il est déterminé que le dispositif capteur identifié (16) est apte à capturer des données suffisantes pour réaliser le premier processus d'authentification, alors :
l'indication (206) que le premier processus d'authentification est disponible pour identifier et/ou authentifier l'utilisateur sur le dispositif (10) ;
(d) s'il est déterminé que le dispositif capteur identifié (16) n'est pas apte à capturer des données suffisantes pour réaliser le premier processus d'authentification :
(d1) la sélection (210) d'un deuxième processus d'authentification à partir de l'ensemble de processus d'authentification ; et
(d2) le test passif de la disponibilité du deuxième processus d'authentification sélectionné pour une utilisation dans l'identification et/ou l'authentification de l'utilisateur, comprenant :
(i) l'identification (202) d'un deuxième dispositif capteur (16) configuré pour capturer des données pour le deuxième processus d'authentification ;
(ii) l'activation passive (203) du deuxième dispositif capteur identifié (16) de manière à mesurer (204) un ou plusieurs paramètres environnementaux ; et
(iii) le fait de déterminer (205), en fonction des paramètres mesurés, si le deuxième dispositif capteur identifié (16) est apte à capturer des données suffisantes pour réaliser le deuxième processus d'authentification.

2. Procédé selon la revendication 1, comprenant en outre la désactivation du dispositif de capteur identifié (16) à la suite de l'étape d'activation et la réactivation du dispositif de capteur identifié (16) si le premier processus d'authentification est lancé.

3. Procédé selon l'une quelconque des revendications précédentes, dans lequel les paramètres environnementaux sont mesurés sans inviter l'utilisateur à interagir avec le dispositif (10).

4. Procédé selon l'une quelconque des revendications précédentes, dans lequel le premier processus d'authentification comprend une étape consistant à inviter l'utilisateur à interagir avec le dispositif (10).

5. Procédé selon l'une quelconque des revendications précédentes, dans lequel :
le premier processus d'authentification est une reconnaissance faciale ; et
le dispositif capteur (16) est une caméra configurée pour mesurer une quantité de lumière, la caméra étant apte à capturer des données suffisantes pour réaliser une reconnaissance faciale si la quantité de lumière est supérieure à une quantité de seuil.

6. Procédé selon l'une quelconque des revendications 1 à 4, dans lequel :
le premier processus d'authentification est une reconnaissance vocale ; et
le dispositif capteur (16) est un microphone configuré pour mesurer le bruit, le microphone étant apte à capturer des données suffisantes pour réaliser une reconnaissance vocale si la quantité de bruit est inférieure à un niveau seuil.

7. Système configuré pour réaliser le procédé selon l'une quelconque des revendications précédentes.

8. Code lisible par ordinateur configuré pour réaliser les étapes du procédé selon l'une quelconque des revendications 1 à 6 lorsque le code est exécuté sur un ordinateur.

9. Support de stockage lisible par ordinateur sur lequel est codé le code lisible par ordinateur selon la revendication 8.
